Europäisches Patentamt

(19) European Patent Office

Office européen des brevets

(11) Numéro de publication: **0 231 702**
**B1**

(12) FASCICULE DE BREVET EUROPEEN

(45) Date de publication du fascicule du brevet:
28.02.90

(51) Int. Cl.⁴: **G07F 7/10**

(21) Numéro de dépôt: **86402893.1**

(22) Date de dépôt: **22.12.86**

(54) **Procédé et appareil pour certifier des services obtenus à l'aide d'un support portatif tel qu'une carte à mémoire.**

(30) Priorité: **31.12.85 FR 8519502**

(43) Date de publication de la demande:
**12.08.87 Bulletin 87/33**

(45) Mention de la délivrance du brevet:
**28.02.90 Bulletin 90/9**

(84) Etats contractants désignés:
**AT BE CH DE ES FR GB IT LI LU NL SE**

(56) Documents cités:
**EP-A- 0 006 498**
**EP-A- 0 032 193**
**EP-A- 0 100 260**
**EP-A- 0 161 181**
**FR-A- 2 526 977**

**INTERNATIONAL CONFERENCE ON SECURE COMMUNICATION SYSTEMS, 22-23 février 1984, pages 1-4, The Institution of Electrical Engineers, Londres, GB; D.W. DAVIES: "Smart cards, digital signatures and negotiable documents"**

(73) Titulaire: **BULL CP8, Rue Eugène Hénaff BP 45, F-78190 Trappes(FR)**

(72) Inventeur: **Chemin, François, 10 rue Auguste Rodin, F-78000 Plaisir(FR)**
Inventeur: **Ugon, Michel, 6 rue des Cépages, F-78310 Maurepas(FR)**

(74) Mandataire: **Debay, Yves, 25 avenue de la Grande Armée GA 4X018, F-75016 Paris(FR)**

ACTORUM AG

**Description**

L'invention a pour objet un procédé et un appareil pour certifier des services obtenus à l'aide d'un support portatif tel qu'une carte à mémoire.

Bien que la carte magnétique soit largement utilisée comme moyen de délivrance de services, les prestataires de ces services s'inquiètent du nombre croissant des services qui sont délivrés à tort à partir de cartes volées ou de fausses cartes.

Il est nécessaire de rappeler brièvement le principe de délivrance d'un service avec une carte à piste magnétique pour mieux en faire ressortir les inconvénients et en prenant comme exemple le cas d'une carte de paiement.

Dans un premier temps, la preuve d'une transaction réalisée entre un client et un commerçant se matérialise par un reçu ou récépissé sur lequel sont notamment inscrits : le montant de la transaction, des informations d'identification du client (son nom, son numéro de compte, . . . ) prélevées directement sur la carte (à partir de la piste magnétique et/ou d'informations embossées), et des informations d'identification propres au commerçant. Après signature du client, le double du récépissé est remis au client comme preuve et l'original est transmis par le commerçant à son organisme bancaire.

Dans un deuxième temps, l'organisme bancaire, sur la base des informations inscrites sur le récépissé, lance une suite d'opérations pour débiter le compte client du montant de la transaction et pour créditer le commerçant de ce même montant. Une fois ces opérations de débit et de crédit réalisées, la transaction est validée.

L'exposé d'un tel principe amène à faire deux constatations :

- le commerçant n'a aucun moyen à sa disposition pour détecter une carte volée ou une fausse carte au moment où s'effectue une transaction.
- et l'organisme bancaire n'a aucun moyen à sa disposition pour prouver, au simple examen d'un récépissé remis par un commerçant, que la transaction correspondante a pu être réalisée à partir d'une carte volée ou d'une fausse carte.

Ainsi, dans la majorité des cas, une transaction frauduleuse ne pourra être détectée que par le client après constatation soit du vol de sa carte, soit d'un débit sur son compte du montant d'une transaction qu'il n'a jamais réalisée. L'organisme bancaire ouvrira alors une enquête dont les résultats ne sont jamais immédiats.

Cependant, pour diminuer le nombre des transactions frauduleuses, le commerçant peut faire un contrôle consistant à vérifier que le nom embossé sur la carte est le même que celui inscrit sur une pièce d'identité présentée par le client. Un tel contrôle dissuasif pour de petits fraudeurs, ne l'est pas pour des fraudeurs avertis. Un deuxième contrôle peut consister à vérifier que le numéro embossé sur la carte n'est pas inscrit sur une liste noire régulièrement mise à jour par les organismes bancaires. Ces contrôles ne sont pas efficaces pour une carte dont le vol n'a pas encore été constaté et pour une fausse carte non encore détectée.

Il existe des solutions où toutes les opérations allant de la demande d'obtention d'un service à la délivrance de ce service sont contrôlées, vérifiées et exécutées en une seule fois, mais ces solutions nécessitent des équipements relativement coûteux (voir per exemple FR-A 2 526 977).

Au contraire, le but de l'invention est de concevoir une solution intermédiaire où des opérations de contrôle et de vérification sont faites au moment de la délivrance du service avec des garanties suffisantes pour le prestataire de services, et peuvent être ensuite complétées après délivrance du service pour certifier que ce service a été délivré dans des conditions régulières tant pour le client que pour le prestataire. De plus, l'équipement nécessaire se limite à un appareil simple, peu encombrant, peu coûteux et avantageusement portatif.

L'invention propose un procédé pour certifier un service délivré à l'aide d'un objet portatif, tel qu'une carte, à mémoire accouplé à un premier appareil, caractérisé en ce qu'il consiste à faire établir par l'appareil un certificat constitué d'au moins deux informations, d'une part un résultat calculé par des circuits de traitement de l'objet à partir de paramètres internes et/ou externes à l'objet et d'une clé secrète, et d'autre part les paramètres internes et/ou externes précités qui ont été nécessaires au calcul du résultat, et à enregistrer ce certificat sur un support comme moyen de preuve de la délivrance d'un service, et en ce qu'il consiste dans une deuxième étape à faire recalculer par des circuits de traitement d'un second appareil un résultat à partir des paramètres internes et/ou externes du certificat et de la clé secrète, et à comparer ce résultat au résultat du certificat pour certifier que le service a bien été obtenu à l'aide de l'objet prévu pour l'obtention de ce service.

Selon une autre caractéristique, le résultat du certificat est calculé dans la première étape par les circuits de traitement de la carte, et la clé secrète est préenregistrée dans la mémoire de la carte pour interdire de calculer à l'avance un résultat plausible.

Selon une autre caractéristique, le résultat du certificat prend en compte un paramètre variable interne à la carte pour ne jamais obtenir deux résultats indentiques pour une même carte.

Selon une autre caractéristique, le certificat établi lors de la première étape est enregistré soit sur un support papier tel qu'un récépissé, soit sur un support magnétique ou électronique. Il propose aussi un appareil ayant les caractéristiques de la revendication 12.

D'autres avantages, caractéristiques et détails apparaîtront à la lumière de la description explicative qui va suivre faite en référence aux dessins annexés donnés à titre d'exemple et dans lesquels :

- la figure 1 illustre de façon schématique un appareil qui met en oeuvre le procédé conforme à l'invention,

- et la figure 2 donne un exemple de certificat délivré par un prestataire après une délivrance d'un service.

L'exemple qui va être décrit ci-après est une illustration du procédé conforme à l'invention dans une application de paiement, mais le principe de l'invention reste valable quelle que soit la nature du service délivré.

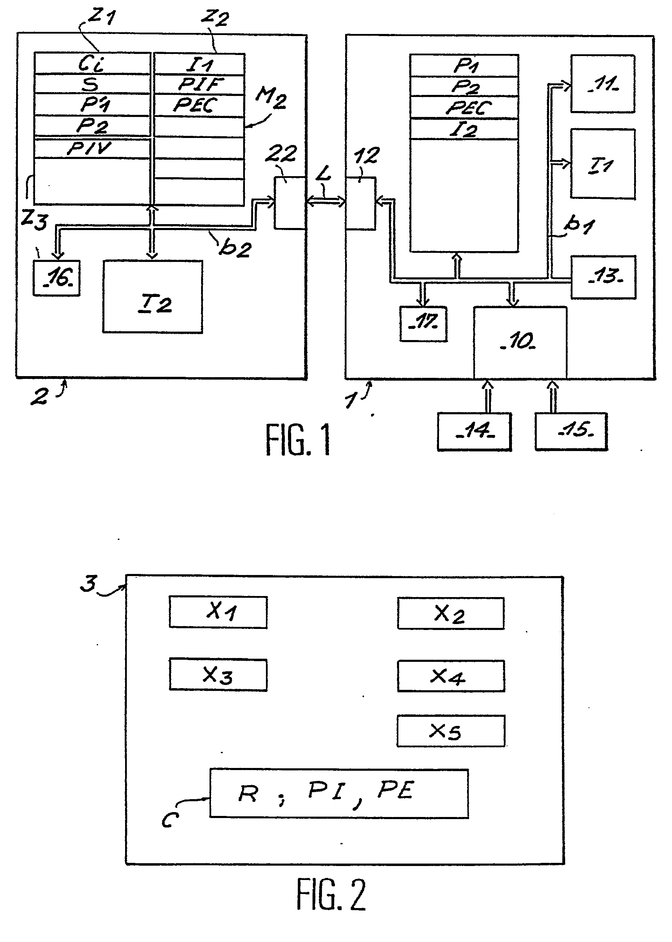

En référence à la figure 1, l'appareil (1) comprend: un dispositif d'entrée (10) de données constitué par exemple par un clavier, une mémoire (M1), des circuits de traitement (T1) tels qu'un microprocesseur classique, et une unité d'affichage (11) constituée par exemple par des diodes électroluminescentes.

L'ensemble de ces circuits sont reliés entre eux par un bus de liaison (b1) qui véhicule des signaux de commande, d'adresses et de données.

Cet appareil (1) est destiné à recevoir un objet portatif amovible (2) tel qu'une carte à mémoire comprenant une mémoire (M2) et des circuits de traitement (T2) reliés par un bus de liaison (b2). Une telle carte est notamment décrite dans les brevets français n° 2 401 459 et 2 461 301 de la demanderesse.

La mémoire (M2) de la carte (2) comprend au moins trois zones de mémoire (Z1, Z2, Z3). La zone de mémoire (Z1) est inaccessible en écriture et en lecture depuis l'extérieur, et les zones de mémoire (Z2, Z3) ne sont accessibles qu'en lecture depuis l'extérieur.

L'accouplement de la carte (2) avec l'appareil (1) est réalisé par l'intermédiaire des deux interfaces (22, 12) reliées entre elles par une liaison (L) électrique. A titre d'exemple, ces deux interfaces sont du type de celle décrite dans la demande de brevet français de la demanderesse publiée sous le n° 2 490 367, et l'interface (12) de l'appareil (1) peut être avantageusement équipée du connecteur tel que décrit dans le brevet français de la demanderesse n° 2 445 560 pour accoupler de façon amovible la carte (2) à l'appareil (1). Enfin, le mode de dialogue ou de transmission des informations entre la carte (2) et l'appareil (1) peut être avantageusement celui décrit dans le brevet français de la demanderesse n° 2 483 713.

L'appareil (1) est alimenté soit par le secteur, soit par une batterie (13) autonome incorporée dans l'appareil. Il peut être avantageusement conçu de manière portable compte-tenu de faible encombrement des circuits qu'il contient.

Cet appareil (1) servir de support à la description du procédé conforme à l'invention.

D'une façon générale, l'appareil utilisé pour matérialiser une transaction et qui est mis à la disposition du commerçant va remplir trois fonctions principales :
- la première fonction consiste à authentifier la carte présentée par le client pour permettre au commerçant de détecter une fausse carte,
- la deuxième fonction consiste à identifier le client en réalisant un contrôle sur un code propre au client et entré dans l'appareil pour permettre au commerçant de détecter une carte volée,
- enfin, la troisième fonction consiste à calculer un résultat à partir de paramètres internes et/ou externes à la carte.

Ensuite, le commerçant établit ou fait établir un moyen de preuve de la transaction sur un support quelconque (papier, électronique ou magnétique) qui portera, en plus des informations spécifiques de la transaction, une information dénommée certificat constitué du résultat précité et des paramètres nécessaires à son calcul.

D'une façon générale, l'appareil utilisé pour valider une transaction et qui est mis à la disposition de l'organisme bancaire va remplir une fonction principale qui consiste, à partir d'un support servant de moyen de preuve et remis ou transmis par un commerçant ou un client, à recalculer le résultat du certificat à partir des paramètres mentionnés sur le support et à vérifier que ce résultat est bien égal à celui inscrit sur le support. Un tel contrôle permet de détecter de faux supports réalisés par un commerçant fraudeur ou de détecter un support correct mais présenté à l'encaissement par un commerçant autre que celui qui a émis le support d'origine.

Le paiement du montant d'une transaction s'effectue en deux étapes.

La première étape se réalise chez le commerçant et se décompose en sept phases successives.

### Première phase

Le client à la demande du commerçant introduit sa carte (2) dans l'appareil (1). Si la carte (2) est correctement positionée, elle déclenche la mise sous tension de l'appareil (1).

### Deuxième phase

L'appareil (1) effectue un contrôle sur la carte (2) du client. Plus précisément, l'appareil (1) va prélever une information (I1) dans la zone de mémoire (Z2) de la carte (2) à une adresse déterminée. Cette information (I1) permet de vérifier l'état de la carte, c'est-à-dire, que cette information indique si l'utilisation antérieure de la carte n'a pas donné lieu à une interdiction ou que la durée de validité de la carte n'est pas dépassée, etc. . .

### Troisième phase

L'appareil (1) va authentifier la carte (2) c'est-à-dire vérifier s'il est en présence ou non d'une fausse carte.

Pour cela, l'appareil (1) prélève une information (I2) dans sa mémoire (M1) et chiffre cette information avant de l'envoyer à la carte (2). Le chiffrement est effectué par les circuits de traitement (T1) de l'appareil qui appliquent à l'information (I2) la fonction publique à clé publique d'un alorithme à clé publique traduite par un programme (P1) enregistré dans sa mémoire (M1).

Un tel alorithme est tel que la connaissance de la fonction publique ne permet pas d'en déduire la fonction inverse à clé secrète. La fonction inverse à clé secrète est enregistrée sous la forme d'une programme (P'1) dans la zone de mémoire (Z1) de la carte (2).

L'information chiffrée (I3) par l'appareil (1) est transmise à la carte (2) et déchiffrée par celle-ci par les circuits de traitement (T2) par exécution du programme (P'1).

L'information déchiffrée par la carte (2) est transmise à l'appareil (1) qui la compare avec l'infor-

mation (I2) d'origine. En cas de non concordance, l'appareil (1) aura détecté une fausse carte.

Par sécurité, l'information chiffrée (I3) est variable. Pour cela, l'appareil (1) prend en compte une information (I2) variable et constituée par exemple par un nombre aléatoire.

En variante, l'algorithme à clé publique peut être utilisé différemment. L'appareil (1) envoie une information (I2) variable (nombre aléatoire par exemple) non chiffrée à la carte (2). La carte (2) chiffre cette information (I2) par le programme (P'1) et l'information résultante (I3) est déchiffrée par le programme (P1) de l'appareil (1).

Quatrième phase

L'appareil (1) va identifier le porteur de la carte (2) après que ce dernier ait entré dans l'appareil (1) une information qui lui est propre et qui a été préalablement enregistrée dans la mémoire (M2) de la carte (2).

Cette information est généralement un code confidentiel (Ce) rentré à l'aide du clavier (10) et qui est comparé par la carte (2) avec un code confidentiel (Ci) préenregistré dans la zone de mémoire (Z1) de la carte (2).

S'il n'y a pas identité entre ces deux codes ou que ces deux codes (Ci, Ce) ne satisfont pas une relation prédéterminée, l'appareil (1) signale par tout moyen approprié, que le porteur est en possession d'une carte volée ou que le porteur s'est trompé en rentrant son code confidentiel. Dans ce dernier cas, le porteur peut recommencer l'opération, mais au bout de trois tentatives en général, la carte (2) va s'invalider elle-même et devenir inutilisable en se mettant dans un état déterminé représenté par l'information (I1) inscrite dans la zone de mémoire (Z2). C'est cet état qui est contrôlé au cours de la phase 2 précitée.

Le code confidentiel (Ce) entré dans l'appareil (1) et qui est propre au porteur de la carte (2) peut être remplacé par une autre information telle que par exemple :
- un code numérique qui reflète la signature du porteur et établi par un analyseur de signature (14) relié à l'appareil (1),
- ou un code numérique qui reflète la voix du porteur et établi par un analyseur vocal (15) relié à l'appareil (1).

Cinquième phase

La carte (2) du client va calculer un résultat (R) en vue de la constitution d'un certificat (C).

Le certificat (C) est constitué de deux informations :
- une première information qui est le résultat (R) du calcul effectué par la carte (2) à partir de paramètres internes préenregistrés dans la carte (2) et/ou de paramètres externes entrés dans l'appareil (1)
- et une deuxième information constituée des paramètres internes (PI) et/ou externes (PE) nécessaires au calcul du résultat (R), et qui sera ensuite utilisée par l'organisme bancaire pour recalculer la valeur du résultat (R) du certificat (C).

A titre d'exemple, les paramètres internes (PI) utilisés par la carte (2) pour calculer le résultat (R) du certificat (C) sont les suivants :
- un paramètre fixe (PIF) propre à la carte, tel que par exemple son numéro de série inscrit dans la mémoire (Z2) lors de la fabrication de la carte (2),
- et un paramètre variable (PIV) tel que la donnée qui reflète l'état de la carte après chaque utilisation, cet état de la carte (2) est enregistré dans la zone de mémoire de contrôle (Z3) et à chaque transaction ou utilisation de la carte, au moins un bit de cette zone de mémoire est modifié en interne par les circuits de traitement (T2) de la carte.

A titre d'exemple, les paramètres externes (PE) communiqués à la carte (2) pour calculer le résultat (R) du certificat (C) sont les suivants :
- une donnée aléatoire (PEA),
- et une donnée propre au commerçant (PEC) qui est préenregistrée dans la mémoire (M1) de l'appareil (1).

Le calcul du résultat (R) est effectué par les circuits de traitement (T2) de la carte (2) suivant un programme (P2) préenregistré dans la zone de mémoire (Z1) de la carte inaccessible de l'extérieur pour le conserver secret.

Selon un mode préférentiel de calcul du résultat (R), le programme (P2) prend au moins en compte un paramètre variable à chaque calcul afin que deux résultats (R) ne soient jamais identiques, notamment pour les différents résultats calculés par une même carte. Ce paramètre variable peut être avantageusement le paramètre interne (PIV) à la carte qui reflète l'état de la carte modifié à chaque utilisation de celle-ci.

L'utilisation de ce paramètre variable (PIV) interdit la possibilité pour un fraudeur de pouvoir réutiliser un résultat (R) qui pourrait être reconnu comme valable bien qu'étant à la base d'une transaction frauduleuse.

Pour augmenter la sécurité, le programme (P2) de calcul du résultat (R) prend également en compte une clé secrète (S) préenregistrée dans la zone de mémoire (Z1) de la carte, afin d'empêcher un fraudeur de pouvoir précalculer à l'avance un résultat (R).

A titre d'exemple, le résultat (R) est calculé à partir : du paramètre interne variable (PIV) spécifiant l'état de la carte, du paramètre interne correspondant au numéro de série de la carte ou de tout autre paramètre propre à la carte, afin que deux cartes, ayant à un instant donné un même état, puissent calculer deux résultats différents, d'un paramètre externe (PEC) propre au commerçant afin de personnaliser le résultat (R) pour éviter qu'un commerçant utilise à son profit un résultat (R) calculé à la suite d'une transaction réalisée par un autre commerçant, et d'une clé secrète (S).

En conclusion, le certificat (C) fait apparaitre :
- le résultat (R) précédemment calculé,
- et tous les paramètres (PI, PE) sauf la clé secrète (S), qui ont servi au calcul du résultat(R).

Il est important de noter qu'un certificat (C) n'est absolument pas confidentiel et que deux certificats (C) ne sont jamais identiques.

A titre d'exemple, le programme (P2) qui permet de calculer le résultat (R) d'un certificat peut être un algorithme de chiffrement réversible et public tel que l'algorithme connu sous le nom de "DES".

Sixième phase

Le commerçant émet une preuve de la transaction par l'intermédiaire d'un support tel qu'un support papier ou récépissé (3) sur lequel sont notamment inscrits en référence à la figure 2 :
- le montant (X1) de la transaction,
- la date (X2) de la transaction,
- le numéro d'ordre (X3) du récépissé,
- l'identité (X4) du client (nom, organisme bancaire et numéro de compte à débiter) prélevée sur la carte,
- l'identité (X5) du commerçant (nom, organisme bancaire et numéro de compte à créditer),
- et le certificat (C) constitué d'un résultat (R) et des paramètres (PI, PE) nécessaires à son calcul.

Le certificat (C) une fois calculé est affiché sur l'unité (II) de l'appareil(1), et le commerçant le recopie sur le récépissé (3). Cependant, il peut être prévu que le certificat (C) soit automatiquement inscrit sur le récépissé (3).

Septième et dernière phase

L'état de la carte est modifié dans la zone de mémoire (Z3) par les circuits de traitement (T2) et la carte (2) est retirée de l'appareil (1) entraînant sa mise hors tension.

La seconde étape est réalisée en une seule phase au niveau de l'organisme bancaire.

Le récépisse (3) ainsi établi est ensuite remis par le commerçant à son organisme bancaire qui possède un appareil (1) similaire à celui du commerçant ainsi qu'une carte de contrôle similaire à la carte client (2) qui est accouplée à l'appareil (1) pour recalculer le résultat (R) du certificat (C) à partir des paramètres inscrits sur le récépissé (3). Une fois la carte(2) de l'organisme bancaire accouplée à l'appareil (1), un opérateur entre au clavier (10) de l'appareil (1) la valeur du certificat (C) telle qu'elle est inscrite sur le récépissé (3) et constituée du résultat (R) et des paramètres (PI, PE) qui ont servi à son calcul. Cette valeur est enregistrée dans la mémoire (M1) de l'appareil (1) et les paramètres du certificat (C) sont transmis à la carte de contrôle (2).

La carte de contrôle (2) contient le même programme (P2) de calcul du résultat (R) que la carte client (2) ainsi que la même clé secrète (S). Les circuits de traitement (T2) de cette carte (2) calculent un résultat (R), et la carte (2) ou l'appareil (1) vérifie que ce résultat concorde bien avec celui du récépissé (3). En cas de non concordance, l'organisme bancaire aura décelé un faux récépissé (3) établi sur la base d'une transaction frauduleuse. Cette vérification est effectuée par un circuit comparateur (16) de la carte (2) ou un circuit comparateur (17) de l'appareil (1).

En outre, le client ou le commerçant pourra toujours faire justifier une transaction en présentant le double du récépissé à l'organisme bancaire qui peut contrôler immédiatement la validité du récépissé en recalculant le résultat du certificat.

Selon une autre caractéristique du procédé conforme à l'invention, lorsque le calcul du résultat (R) du certificat (C) prend en compte un paramètre externe propre au commerçant, ce paramètre (PEC) n'est pas introduit par le commerçant. Plus précisément, le commerçant possède une carte semblable aux cartes (2) précédentes et qui contient ce paramètre. Pour que l'appareil (1) puisse fonctionner, il faut effectuer une opération d'initialisation qui consiste à accoupler la carte (2) à l'appareil, à faire prélever par l'appareil (1) le paramètre propre au commerçant et à stocker ce paramètre (PEC) dans la mémoire (M1) de l'appareil (1).

En phase d'utilisation pour le calcul d'un certificat, l'appareil (1) transmettra directement ce paramètre externe (PEC) à la carte client (2).

De préférence, cette étape d'initialisation n'est ni réalisée une fois pour toutes, ni réalisée avant chaque transaction, mais doit être refaite systématiquement par exemple lorsque la batterie (12) de l'appareil est vide, lorsque l'appareil a fonctionné pendant un temps déterminé ou que l'appareil a réalisé un nombre déterminé de transactions.

De cette façon, l'intérêt que peut présenter le vol d'un appareil devient très limité.

Dans l'exemple précédent, le certificat (C) est inscrit sur un support papier (récépissé) qui sert de moyen de preuve, mais le principe de l'invention reste valable si le support est électronique (mémoire) ou magnétique (bande). Dans ce cas, le certificat (C) est enregistré sur le support électronique ou magnétique à la fin de la première étape, puis le contenu de ce support est vidé, par exemple chaque jour ou après $n$ transactions, et transmis à un système central pour certification (deuxième étape).

**Revendications**

1. Procédé pour certifier un service délivré à l'aide d'un objet portatif (2) tel qu'une carte à mémoire, accouplé à un premier appareil (1), caractérisé en ce qu'il consiste à faire établir par l'appareil (1) un certificat (C) constitué d'au moins deux informations, d'une part un résultat (R) calculé par des circuits de traitement (T2) de l'objet à partir de paramètres internes et/ou externes (PI, PE) à l'objet (2) et d'une clé secrète (S), et d'autre part les paramètres internes et/ou externes (PI, PE) précités qui ont été nécessaires au calcul du résultat (R), et à enregistrer ce certificat (C) sur un support (3) comme moyen de preuve de la délivrance d'un service, et en ce qu'il consiste dans une deuxième étape à faire recalculer par des circuits de traitement (T2) d'un second appareil (1) un résultat (R) à partir des paramètres internes et/ou externes (PI, PE) du certificat (C) et de la clé secrète (S), et à comparer ce résultat avec le résultat du certificat pour certifier que le service a bien été obtenu à l'aide de l'objet conçu pour l'obtention de ce service.

2. Procédé selon la revendication 1 caractérisé en ce qu'il consiste à prendre en compte un paramètre interne variable (PIV) pour le calcul du résultat (R) du certificat (C).

3. Procédé selon l'une des revendications 1 ou 2, caractérisé en ce qu'il consiste à prendre en compte un paramètre interne fixe (PIF) propre à l'objet (2) pour le calcul du résultat (R) du certificat (C).

4. Procédé selon l'une des revendications 1 à 3, caractérisé en ce qu'il consiste à prendre en compte un paramètre externe (PEC) transmis à l'objet (2) pour le calcul du résultat (R) du certificat (C).

5. Procédé selon l'une des revendications 1 à 4, caractérisé en ce qu'il consiste à prendre en compte un paramètre externe aléatoire (PEA) transmis à l'objet (2) pour le calcul du résultat (R) du certificat (C).

6. Procédé selon la revendication 4, caractérisé en ce qu'il consiste à prélever le paramètre interne (PEC) à partir d'un second objet semblable à l'objet (2).

7. Procédé selon l'une des revendications précédentes, caractérisé en ce qu'il consiste à afficher le résultat (R) du certificat (C) sur une unité d'affichage (11) et à le retranscrire manuellement sur le support (3) tel qu'un support papier.

8. Procédé selon l'une des revendications 1 à 6, caractérisé en ce qu'il consiste à faire inscrire automatiquement sur le support (3) le résultat (R) du certificat (C) calculé par l'objet (2).

9. Procédé selon l'une des revendications 1 à 7, caractérisé en ce qu'il consiste à enregistrer le certificat (C) sur un support électronique ou magnétique.

10. Procédé selon l'une des revendications précédentes caractérisé en ce qu'il consiste, au cours de la première étape pour vérifier l'authenticité de l'objet (2) à prélever dans l'objet (2) une information non chiffrée (I2) et une information chiffrée (I3) obtenue par application sur l'information non chiffrée d'un algorithme de chiffrement, et en ce qu'il consiste à faire appliquer sur l'information chiffrée (I3) la fonction inverse de déchiffrement pour retrouver une information non chiffrée (I2), et à vérifier que cette information non chiffrée est bien égale à l'information non chiffrée prélevée dans l'objet (2).

11. Procédé selon la revendication 10, caractérisé en ce que l'algorithme de chiffrement précité est la fonction inverse à clé secrète d'un algorithme à clé publique, et en ce que l'algorithme de déchiffrement précité est la fonction publique à clé publique du type algorithme.

12. Appareil pour la mise en oeuvre du procédé tel que défini selon l'une des revendications précédentes, caractérisé en ce qu'il comprend une mémoire (M1) et un circuit d'accouplement (12) pour recevoir de façon amovible un objet portatif (2), tel qu'une carte à mémoire, (2) comprenant une mémoire (M2) et des circuits de traitement (T2) qui calculent un résultat (R) à partir d'un programme (P2) enregistré dans la mémoire (M2) et qui prend en compte des paramètres internes (PI) préenregistrés dans la mémoire (M2) et/ou des paramètres externes (PE) entrés dans l'objet (2), ledit résultat étant unique pour chaque service délivré avec l'objet (2).

13. Appareil selon la revendication 12, caractérisé en ce que sa mémoire (M1) contient un paramètre externe (PEC) propre au prestataire de service et pris en compte pour le calcul du résultat (R).

14. Appareil selon la revendication 13, caractérisé en ce que le paramètre propre au prestataire de service (PEC) est prélevé d'un objet (2) attribué au prestataire de service et accouplé audit appareil (1).

**Claims**

1. A method of attesting a service provided by means of a portable object (2), such as a memory card, coupled to a first device (1), characterised in that it consists in causing the device (1) to establish a certificate (C) comprising at least two data, on the one hand a result (R) calculated by circuits (T2) for processing of the object from parameters (PI, PE) internal and/or external to the object (2) and a secret key (S) and on the other hand the aforesaid internal and/or external parameters (PI, PE) which were required for calculation of the result (R), and in recording this certificate (C) on a carrier (3) as means of proving the deliverance of a service, and in that in a second stage it consists in causing the processing circuits (T2) of a second device (1) to re-calculate a result (R) from the internal and/or external parameters (PI, PE) of the certificate (C) and the secret key (S), and in comparing this result with the result of the certificate to attest that the service had actually been obtained by means of the object devised for obtaining this service.

2. A method according to claim 1, characterised in that it consists in taking into account, a variable internal parameter (PIV) for calculation of the result (R) of the certificate (C).

3. A method according to one of the claims 1 or 2, characterised in that it consists in taking into account a fixed internal parameter (PIF) inherent in the object (2) for calculation of the result (R) of the certificate (C).

4. A method according to one of the claims 1 to 3, characterised in that it consists in taking into account an external parameter (PEC) transmitted to the object (2) for calculation of the result (R) of the certificate (C).

5. A method according to one of the claims 1 to 4, characterised in that it consists in taking into account a random external parameter (PEA) transmitted to the object (2) for calculation of the (R) of the certificate (C).

6. A method according to claim 4, characterised in that it consists in extracting the external parameter (PEC) from a second object analogous to the object (2).

7. A method according to one of the preceding claims, characterised in that it consists in displaying the result (R) of the certificate (C) on a display unit (11) and in manually retranscribing the same on a carrier (3) such as a paper carrier.

8. A method according to one of the claims 1 to 6, characterised in that it consists in causing the result (R) of the certificate (C) calculated by the object (2) to be inscribed automatically on the carrier (3).

9. A method according to one of the claims 1 to 7, characterised in that it consists in recording the certificate (C) on an electronic or magnetic carrier.

10. A method according to one of the preceding claims, characterised in that during the first stage for the purpose of checking the authenticity of the object (2), it consists in extracting from the object (2) an uncoded datum (12) and a coded datum (13) obtained by application to the uncoded datum of a coding algorithm, and in that it consists in causing the application to the coded datum (13) of the inverse decoding function to rediscover an uncoded datum (12), and in verifying that this uncoded datum is actually identical to the uncoded datum extracted from the object (2).

11. A method according to claim 10, characterised in that the aforesaid coding algorithm is the inverse secret key function of a public key algorithm, and in that the aforesaid decoding algorithm is the public key public function of the algorithm type.

12. Apparatus for carrying out the method as defined in accordance with one of the preceding claims, characterised in that it comprises a memory (M1) and a coupling circuit (12) for receiving in a removable manner a portable object (2), such as a memory card (2), comprising a memory (M2) and processing circuits (T2) which calculate a result (R) from a program (P2) recorded in the memory (M2) and which takes into account internal parameters (P1) prerecorded in the memory (M2) and/or external parameters (PE) entered in the object (2), the said result being unique for every service provided with the object (2).

13. Apparatus according to claim 12, characterised in that its memory (M1) contains an external parameter (PEC) appertaining to the service supplier and taken into account for calculation of the result (R).

14. Apparatus according to claim 13, characterised in that the parameter (PEC) appertaining to the service supplier is extracted from an object (2) attributed to the service supplier and coupled to the said device (1).

## Patentansprüche

1. Verfahren zur Bescheinigung einer Dienstleistung, die mittels eines tragbaren Gegenstandes (2), wie einer Speicherkarte, erlangt wird, welcher an ein erstes Gerät (1) angekoppelt ist, dadurch gekennzeichnet, daß es darin besteht, das Gerät (1) eine aus wenigstens zwei Informationen bestehende Bescheinigung (C) ausfertigen zu lassen, einerseits aus einem Ergebnis (R), das ausgehend von Parametern (PI, PE), die zu dem Gegenstand (2) intern und/oder extern sind, und ausgehend von einem geheimen Schlüssel (S) durch Verarbeitungsschaltungen (T2) des Gegenstandes berechnet werden, und andererseits aus den genannten internen und/oder externen Parametern (PI, PE), die für die Berechnung des Ergebnisses (R) notwendig gewesen sind, und diese Bescheinigung (C) auf einem Träger (3) als Beweismittel für die Erlangung einer Dienstleistung zu speichern, und daß es in einem zweiten Schritt darin besteht, durch die Verarbeitungsschaltungen (T2) eines zweiten Gerätes (1) ein Ergebnis (R) ausgehend von den internen und/oder externen Parametern (PI, PE) der Bescheinigung (C) und von dem geheimen Schlüssel (S) erneut zu berechnen, und dieses Ergebnis mit dem Ergebnis der Bescheinigung zu vergleichen, um zu bescheinigen, daß die Dienstleistung mittels des Gegenstandes, der für die Erlangung dieser Dienstleistung entwickelt worden ist, tatsächlich erlangt wurde.

2. Verfahren nach Anspruch 1, dadurch gekennzeichnet, daß es darin besteht, einen variablen internen Parameter (PIV) für die Berechnung des Ergebnisses (R) der Bescheinigung (C) zu berücksichtigen.

3. Verfahren nach Anspruch 1 oder 2, dadurch gekennzeichnet, daß es darin besteht, einen festen internen Parameter (PIF), der für den Gegenstand (2) charakteristisch ist, für die Berechnung des Ergebnisses (R) der Bescheinigung (C) zu berücksichtigen.

4. Verfahren nach einem der Ansprüche 1 bis 3, dadurch gekennzeichnet, daß es darin besteht, einen externen Parameter (PEC), der zu dem Gegenstand (2) übertragen wird, für die Berechnung des Ergebnisses (R) der Bescheinigung (C) zu berücksichtigen.

5. Verfahren nach einem der Ansprüche 1 bis 4, dadurch gekennzeichnet, daß es darin besteht, einen zufälligen externen Parameter (PEA), der zu dem Gegenstand (2) übertragen wird, für die Berechnung des Ergebnisses (R) der Bescheinigung (C) zu berücksichtigen.

6. Verfahren nach Anspruch 4, dadurch gekennzeichnet, daß es darin besteht, den externen Parameter (PEC) ausgehend von einem dem Gegenstand (2) ähnlichen zweiten Gegenstand abzugreifen.

7. Verfahren nach einem der vorstehenden Ansprüche, dadurch gekennzeichnet, daß es darin besteht, das Ergebnis (R) der Bescheinigung (C) auf einer Anzeigeeinheit (11) anzuzeigen und es auf dem Träger (3), wie einem Papierträger, manuell umzuschreiben.

8. Verfahren nach einem der Ansprüche 1 bis 6, dadurch gekennzeichnet, daß es darin besteht, das Ergebnis (R) der Bescheinigung (C), das durch den Gegenstand (2) berechnet wurde, auf dem Träger (3) automatisch aufzuzeichnen.

9. Verfahren nach einem der Ansprüche 1 bis 7, dadurch gekennzeichnet, daß es darin besteht, die Bescheinigung (C) auf einem elektronischen oder einem magnetischen Träger zu speichern.

10. Verfahren nach einem der vorstehenden Ansprüche, dadurch gekennzeichnet, daß es darin besteht während des ersten Schrittes, um die Echtheit des Gegenstandes (2) zu prüfen, (2) eine unchiffrierte Information (12) sowie eine chiffrierte Information (13) in dem Gegenstand (2) abzugreifen, welche durch Anwenden eines Chiffrieralgorithmus auf die unchiffrierte Information erhalten wird, und daß es darin besteht, auf die chiffrierte Information (13) die umgekehrte Dechiffrierfunktion anzuwenden, um eine unchiffrierte Information (12) wieder zu finden, und daß diese unchiffrierte Information der unchiffrierten Information, die in dem Gegenstand (2) abgegriffen worden ist, tatsächlich entspricht.

11. Verfahren nach Anspruch 10, dadurch gekennzeichnet, daß der genannte Chiffrieralgorithmus die umgekehrte Funktion, mit geheimem Schlüssel, eines Algorithmus mit öffentlichem Schlüssel ist und daß der genannte Dechiffrieralgorithmus die öffentliche Funktion mit öffentlichem Schlüssel vom Typ Algorithmus ist.

12. Gerät für die Durchführung des Verfahrens wie in einem der vorstehenden Ansprüche definiert, dadurch gekennzeichnet, daß es einen Speicher (M1) sowie eine Koppelungsschaltung (12) umfaßt, um einen tragbaren Gegenstand (2), wie eine Speicherkarte, entfernbar aufzunehmen, welcher einen Speicher (M2) sowie Verarbeitungsschaltungen (T2) umfaßt, die ein Ergebnis (R) ausgehend von einem Programm (P2) berechnen, das in dem Speicher (M2) gespeichert wurde, und interne Parameter (PI), welche in dem Speicher (M2) vorgespeichert wurden, und/oder externe Parameter (PE), welche in den Gegenstand (2) eingegeben wurden, berücksichtigt, wobei dieses Ergebnis für jede mit dem Gegenstand (2) erlangte Dienstleistung einzigartig ist.

13. Gerät nach Anspruch 12, dadurch gekennzeichnet, daß sein Speicher (M1) einen externen Parameter (PEC) enthält, der für den Dienstleistenden charakteristisch ist und für die Berechnung des Ergebnisses (R) berücksichtigt wird.

14. Gerät nach Anspruch 13, dadurch gekennzeichnet, daß der Parameter (PEC), der für den Dienstleistenden charakteristisch ist, aus einem Gegenstand (2) abgegriffen ist, der dem Dienstleistenden zugewiesen wird und an dieses Gerät (1) angekoppelt ist.

FIG. 1

FIG. 2